(19) Europäisches Patentamt
European Patent Office
Office européen des brevets

(11) EP 2 012 032 A2

(12) EUROPEAN PATENT APPLICATION

(43) Date of publication:
07.01.2009 Bulletin 2009/02

(51) Int Cl.:
*F16C 32/04* (2006.01)

(21) Application number: 08012135.3

(22) Date of filing: 04.07.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 06.07.2007 JP 2007178310

(71) Applicant: JTEKT Corporation
Osaka-shi
Osaka 542-8502 (JP)

(72) Inventor: Kameno, Hironori
Osaka-shi
Osaka 542-8502 (JP)

(74) Representative: Hager, Thomas Johannes
Hoefer & Partner
Patentanwälte
Pilgersheimer Strasse 20
81543 München (DE)

(54) **Magnetic bearing unit**

(57) Displacement data of axial position targets (20) measured by axial displacement sensors (14) is transmitted to a first main spindle elongation computation section (64), which then computes elongation of a main spindle (15) between the axial position targets (20). The computation result is transmitted to a second main spindle elongation computation section (65), which then computes elongation of the main spindle (15) between one of the axial position targets provided on the side of a tool (22) and the tool (22). The computation result is transmitted to an axial position control section (66). The axial position control section (66) changes the power to be supplied to axial magnetic bearing parts (6), thereby controlling the axial position of the main spindle (15) so that the axial position of the tool (22) becomes constant.

*FIG. 1*

## Description

BACKGROUND OF THE INVENTION

This invention relates to a magnetic bearing unit and more particularly to a magnetic bearing unit for suppressing position shift caused by thermal expansion of a main spindle.

A non-contact bearing capable of rotating at high speed and having high durability is widely used as a bearing for' supporting a rotating main spindle of a machine tool such as a grinding machine. Such a main spindle used with a machine tool rotates at high speed and thus produces large heat because of friction with air, etc. Since the main spindle is supported by a noncontact bearing in a noncontact manner, heat dissipation caused by conduction is small and the main spindle becomes a high temperature. Thus, the main spindle thermally expands and the position of a tool such as an abrasive usually attached to the tip of the main spindle shifts in an axial direction from the standard position and thus a problem arises. Although it is also possible to monitor the tool position from an external sensor, etc., and control the grinding position so as to cancel out the tool position shift, a special sensor needs to be provided and the cost increases.

In contrast, a magnetic bearing unit for measuring elongation caused by expansion of the diameter of a main spindle with a radial sensor, thereby computing the temperature of the main spindle, further computing elongation in the thrust direction (axial direction) from the computed temperature of the main spindle, and adjusting the position of the main spindle in the thrust direction based on the amount of the elongation is disclosed (JP-A-2001-269828, JP-A-2006-316959 and JP-A-2007-107584). JP-A-2001-269828 is basic patent of the magnetic bearing unit and JP-A-2006-316959 and JP-A-2007-107584 are the invention of improvement.

In the magnetic bearing unit as shown in JP-A-2001-269828, JP-A-2006-316959 and JP-A-2007-107584, elongation caused by expansion of the diameter of the main spindle is measured. However, the diameter of the main spindle is short as compared with the distance in the axial direction of the spindle and the elongation of the diameter is further slight and thus it is difficult to measure the change accurately. Since the temperature of the main spindle varies from one position to another in the radial direction, if the elongation of the diameter at a specific radial position on the main spindle is measured, the temperature at the point does not indicate the temperature of the whole main spindle. Particularly, it is estimated that the temperature in the portion where the main spindle projects to the outside of a housing of a rotating machine (machine tool) differs largely as the main spindle comes in contact with the outside air. Then, the axial elongation of the main spindle cannot accurately be measured and thus an axial position correction cannot accurately be made either and a problem arises.

SUMMARY OF THE INVENTION

It is therefore an object of the invention to provide a magnetic bearing unit improved so as to be able to precisely measure the elongation of a main spindle in an axial direction thereof and precisely correct the axial position of the main spindle without incurring a drastic cost increase.

According to the invention, a magnetic bearing unit for contactlessly supporting a main spindle with a detachable tool attached to a tip part of the main spindle in an axial direction by a radial magnetic bearing part and an axial magnetic bearing part, comprises:

first and second axial position targets provided on the man spindle; the first axial position target being located closer to the tip part than the second axial position target is located;
first and second axial displacement sensors that detect displacements of the first and second axial position targets, respectively;
a first elongation computation section that computes elongation of the main spindle between the first and second axial position targets based on the displacements of the first and second axial position targets detected by the first and second axial displacement sensors;
a second elongation computation section that computes elongation of the main spindle between the first axial position target and the tool based on the elongation of the main spindle computed by the first elongation computation section; and
an axial position control section that controls the axial position of the main spindle so that the axial position of the tool becomes constant based on the elongation of the main spindle computed by the second elongation computation section.

According to the configuration described above, the first elongation computation section computes the elongation of the main spindle between the first and second axial position targets based on the displacements of the first and.second axial position targets detected by the first and second axial displacement sensors. Since the distance between the first and second axial position targets can be taken larger than the diameter of the main spindle, the elongation caused by expansion of the main spindle between the first and second axial position targets also becomes larger than the elongation caused by expansion of the diameter of the main spindle and the elongation of the main spindle can be computed easily with good accuracy as compared with the related art. The first and second axial displacement sensors is a pair of axial displacement sensors formerly used.as indispensable components in a magnetic bearing unit having axial magnetic bearing parts and the elongation of the main spindle between the axial position targets is computed without adding any sensor.

The spindle elongation computation section computes the elongation of the main spindle between the first axial position targets and the tool based on the elongation of the.main spindle computed by the first main spindle elongation computation section. The relationship between the elongation of the main spindle between the first and second axial position targets and the elongation of the main spindle between the first axial position target and the tool can be found experimentally. The second elongation computation section includes the experimental data, whereby it can compute the elongation of the main spindle between the first axial position target and the tool based on the elongation of the main spindle between the first and second axial position targets.

The axial position control section controls the axial position of the main spindle so that the axial position of the tool becomes constant based on the elongation of the main spindle between the first axial position target and the tool, computed by the second elongation computation section. Therefore, the position is controlled so that the axial position of the tool becomes constant based on the elongation of the main spindle between the first axial position target and the tool, not considered in the axial position control in the related art described above, so that the axial position of the tool can be fixed precisely as compared with the related art.

Preferably, the magnetic bearing unit further comprises:

  a first temperature computation section that computes a temperature of the main spindle between the first and second axial position targets based on the elongation of the main spindle computed by the first elongation computation section; and
  a second temperature computation section that computes the temperature of the main spindle between the first axial position target and the tool based on the- temperature of the main spindle computed by the first temperature computation section,

wherein the second elongation computation section computes the elongation of the main spindle between the axial position target and the tool based on the temperature computed by the second temperature computation section.

According to the configuration described .above, the first temperature computation section computes the temperature of the main spindle between the first and second axial position targets from the relationship between thermal expansion and temperature based on the elongation of the main spindle between the first and second axial position targets, computed by the first main spindle elongation computation section. The temperature of the main spindle between the axial position targets and the temperature of the main spindle between the first axial position target and the tool are not the same. However, both the temperatures involve a correlation and the correlation can be found experimentally. The second elongation computation section includes the experimental data, whereby the second main spindle temperature computation section can compute the temperature of the main spindle between one of the axial position targets provided on the side of the tool and the tool.

Preferably, in the magnetic bearing unit according to the invention, the axial position control section performs the control of the axial position of the main spindle more than once in a preset time.

According to the configuration described above, the axial position control section performs the control of the axial position of the main spindle more than once in a preset time, so that if the elongation of the main spindle changes, the axial position of the main spindle is controlled so that the axial position of the tool becomes constant.

According to the invention, there can be provided a magnetic bearing unit improved so as to be able to precisely measure the elongation of a main spindle in an axial direction thereof and precisely correct the axial position of the main spindle without incurring a drastic cost increase caused by adding a sensor.

BRIEF DESCRIPTION OF THE DRAWINGS

  FIG. 1 is a sectional view of a machine tool including a magnetic bearing unit according to a first embodiment of the invention and is a sectional view based on a plane containing a center axis;
  FIG. 2 is a block diagram of an axial position control circuit of the magnetic bearing unit according to the first embodiment of the invention;
  FIG. 3 is a flowchart to show the operation of the axial position control circuit of the magnetic bearing unit according to the first embodiment of the invention;
  FIG. 4 is a block diagram of a control circuit portion of a magnetic bearing unit according to a second embodiment of the invention; and
  FIG. 5 is a flowchart to show the operation of an axial position control circuit of the magnetic bearing unit according to the second embodiment of the invention.

DETAILED DESCRIPTION OF THE PREFERRED EMBODIMENTS

(First embodiment)

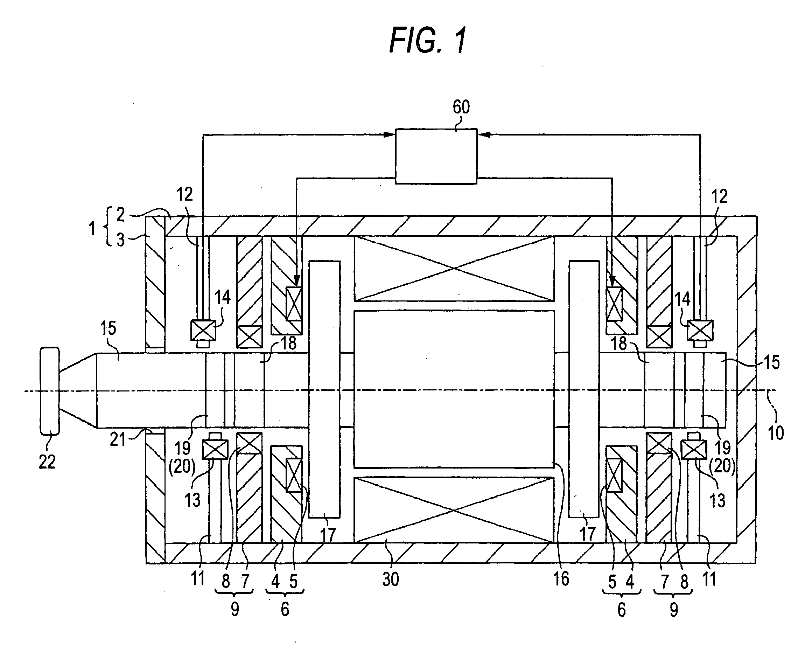

Next, a first embodiment of a magnetic bearing unit according to the invention will be discussed with FIGs. 1 to 3.

A housing 1 of a machine tool including the magnetic bearing unit according to the embodiment is shaped by sealing an opening of a motor housing 2 shaped roughly like a closed-end cylinder with a front housing 3 shaped roughly like a disk, as shown in FIG. 1. A stator 30 is press-fitted into the inner face of the circumferential portion of the motor housing 2 at the center in the length direction. A pair of projection parts 4 projecting in the direction of a center axis 10 of the motor housing 2 and each shaped roughly like a ring is provided at positions in the inner face of the circumferential portion of the housing 1 with the stator 30 between. An electromagnet 5 is provided in each end part of the pair of projection parts 4. The electromagnets 5 have magnetic forces directed toward opposed directions to each other. The pair of projection parts 4 and the electromagnets 5 form a pair of axial magnetic bearing parts 6. A pair of projection parts 7 projecting in the direction of the center axis 10 of the motor housing 2 and each shaped roughly like a ring is provided at-positions in the inner face of the circumferential portion of the motor housing 2 with the pair of axial magnetic bearing parts 6 between. An electromagnet 8 is provided in each tip part of the pair of projection parts 7. The electromagnets 8 have magnetic forces directed toward the direction of the center axis 10 of the motor housing 2 shaped roughly like a closed-end cylinder. The projection parts 7 and the electromagnets 8 form a pair of radial magnetic bearing parts 9. A pair of projection parts 11 and a pair of projection parts 12 projecting in the direction of the center axis 10 of the motor housing 2 and each shaped like a flange are provided at positions in the inner face of the circumferential portion of the motor housing 2 with the pair of radial magnetic bearing parts 9 between. A radial displacement sensor 13 is provided in each tip part of the pair of projection parts 11. An axial displacement sensor 14 is provided in each tip part of the pair of projection parts 12.

On the other hand, a main spindle 15 shaped roughly like a column is supported in a noncontact manner by the pair of axial magnetic bearing parts 6 and the pair of radial magnetic bearing parts 9 in the space containing the center axis 10 of the motor housing 2. A rotor 16 is provided on the outer periphery surface of the main spindle 15 shaped roughly like a column at a position opposed to the stator 30. A pair of axial magnetic disks 17 projecting in the outer peripheral direction of the motor housing 2 and each shaped roughly like a disk is provided at positions on the outer periphery surface of the main spindle 15 with the rotor 16 between. The outer faces in the axial direction of the pair of axial magnetic disks 17 are directed so as to be opposed to the magnetic force directions of the electromagnets 5 forming the pair of axial magnetic bearing parts 6. The pair of axial magnetic disks 17 is each formed of a magnetic substance and thus is attracted by the electromagnets 5 in the axial direction and in the opposite directions.

A pair of radial bearing targets 18 each shaped roughly like a cylinder is fitted into positions on the outer periphery surface of the main spindle 15 with the pair of axial magnetic disks 17 between and positions opposed to the electromagnets 8 forming the pair of radial magnetic bearing parts 9.. The outer peripheral surfaces of the pair of radial bearing targets 18 are directed so as to be opposed to the magnetic force directions of the electromagnets 8 forming the radial magnetic bearing parts 9. The pair of radial bearing targets 18 is each formed of a magnetic substance and thus is attracted by the electromagnets 8 in the radial direction.

A pair of radial position targets 19 each shaped roughly like a cylinder is fitted into positions on the outer periphery surface of the main spindle 15 with the pair of radial bearing targets 18 between and positions opposed to the radial displacement sensors 13. The outer peripheral surfaces of the pair of radial position targets 19 are directed so as to be opposed to the detection faces of the radial displacement sensors 13. The pair of radial bearing targets 18 is each formed of a magnetic substance and thus displacement at the radial position is detected by the corresponding radial displacement sensor 13.

The radial position targets 19 are also opposed to the detection faces of the axial displacement sensors 14 and thus also serve as axial position targets 20. The axial displacement sensors 14 detect displacements of the radial position targets 19, namely, the axial position targets 20, and elongation of the main spindle between the axial position targets 20 can be detected according to the displacements.

A through hole 21 is provided in the center of the front housing 3 shaped roughly like a disk and the end part of the main spindle 15 on the side of the front housing 3 projects to the outside of the housing 1 through the through hole 21. Further, a tool 22 is detachably attached to the tip of the end part of the main spindle 15 on the side of the front housing 3.

The stator 30. is energized during the operating of the machine tool, whereby the rotor 16 rotates and the main spindle 15 and the tool 22 also rotate. The main spindle 15 is supported in a noncontact manner in the axial direction as the axial magnetic bearing parts 6 attract the axial magnetic disks 17 in the opposite axial directions as described above. The main spindle 15 is supported in a noncontact manner in the radial direction as the radial magnetic bearing parts 9 attract the radial bearing targets 18 in the radial direction.

When the main spindle 15 displaces in the radial direction, the displacement is detected by the radial displacement sensors 13 and supply power to the radial.magnetic bearing parts 9 is changed by a radial magnetic control section (not shown), whereby the main spindle 15 is controlled to a given position.

On the other hand, when the main spindle 15 displaces in the axial direction, the displacement is detected by the axial displacement sensors 14 and supply power to the axial magnetic bearing parts 6 is changed by an axial position control circuit 60, whereby the main spindle 15 is controlled to a given position.

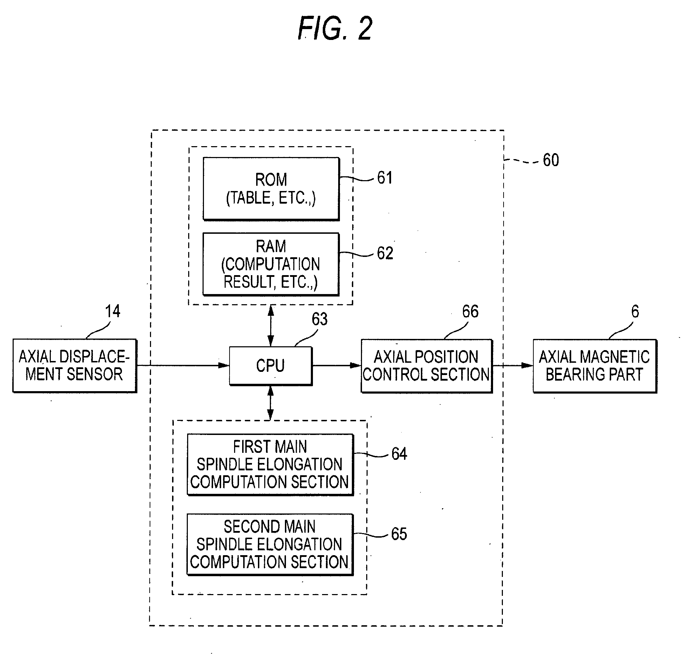

Next, the axial position control circuit 60 will be discussed with FIG. 2.

A. first main spindle elongation computation section 64 computes elongation of the main spindle 15 between the axial position targets 20 by a CPU 63 based on the displacements of the pair of axial position targets 20 detected by the axial displacement sensors 14. A second main spindle elongation computation section 65 computes elongation of the main spindle 15 between one of the axial position targets 20 provided on the side of the tool 22. (hereinafter, simply the tool side axial position target) and the tool 22 by the CPU 63 based on the elongation of the main spindle 15 between the axial position targets 20 and a table stored in ROM 61 of nonvolatile memory. The data of the computed elongation of the main spindle 15 between the tool side axial position target and the tool 22 is temporarily stored in RAM 62 of work memory and then is transmitted to an axial position control section 66. The axial position control section 66 controls the axial position for the axial magnetic bearing part 6 to support the main spindle. 15 based on the data.

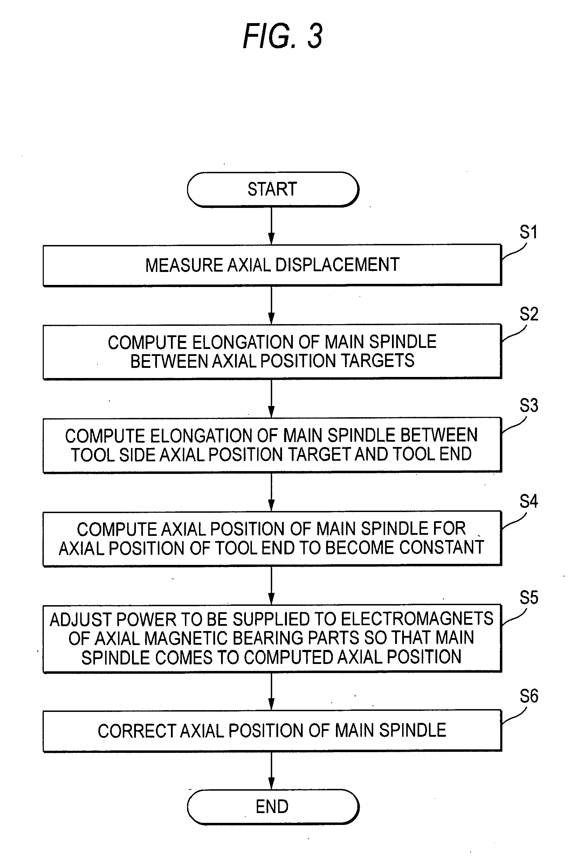

Next, a specific method of axial position control will be discussed with FIG. 3.

The pair of axial displacement sensors 14 measures displacements of the axial position targets 20 from reactance change exerted on the axial displacement sensors 14 by the axial position targets 20 (step 1). The displacement data of the axial position targets 20 is transmitted to the first main spindle elongation computation section 64, which then computes elongation of the main spindle 15 between the axial position targets 20 (step 2). The elongation of the main spindle 15 between the axial position targets 20, computed by the first main spindle elongation computation section 64 is transmitted to the second main spindle elongation computation section 65, which then computes elongation of the main spindle 15 between the tool side axial position target and the tool 22 (step 3). The relationship between the elongation of the main spindle 15 between the axial position targets 20 and the elongation of the main spindle 15 between the tool side axial position target and the tool 22 can be found experimentally. Data as a table of the experimental results is retained in the ROM 61. The second main spindle elongation computation section 65 uses the CPU 63 to perform comparison operation between the elongation of the main spindle 15 between the tool side axial position target and the tool 22 and the data as a table retained in the ROM 61, whereby the elongation of the main spindle 15 between the tool side axial position target and the tool 22 can be found.

The elongation of the main spindle 15 between the tool side axial position target and the tool 22, computed by the second main spindle elongation computation section 65 is transmitted to the axial position control section 66. The axial position control section 66 calculates the axial position for the position of the tool 22 to become constant (step 4) and changes the power to be supplied to the axial magnetic bearing parts 6, thereby controlling the axial position of the main spindle 15 (step 5). Consequently, the axial position of the main spindle 15 is corrected (step 6).

The axial position control circuit 60 used for the control is implemented as a microcomputer. Therefore, the above-described control is made possible simply by adding the functions of the first main spindle elongation computation section 64 and the second main spindle elongation computation section 65 and the experimental data table to a microcomputer implementing the axial position control section 66 formerly used in a magnetic bearing unit having the axial magnetic bearing parts 6.

The.displacement measurement of the axial position targets 20 by the pair of axial displacement sensors 14 and the control of the axial position of the main spindle 15 by the axial position control section 66 are performed more than once every predetermined time during the operating of the machine tool.

According to the magnetic bearing unit used with the machine tool of the embodiment, the following advantages can be provided:

(1) In the embodiment described above, the first main spindle elongation computation section 64 computes the elongation of the main spindle 15 between the axial position targets 20 based on the displacements of the axial position targets 20 detected by the pair of axial displacement sensors 14. Since the pair of axial position targets 20 is provided in the proximity of both end parts of the main spindle 15 in the axial direction in the housing 1, the distance between the axial position targets 20 is larger than the diameter of the main spindle 15. Therefore, the elongation caused by expansion of the main spindle 15 between the axial position targets 20 also becomes larger than the elongation caused by expansion of the diameter of the main spindle 15 and the elongation of the main spindle 15 can be computed more easily with better accuracy than the former method of measuring the elongation of the diameter of the main spindle 15.

(2) The pair of axial displacement sensors 14 used in the embodiment described above is a pair of axial displacement sensors formerly used for axial position control of a main spindle in a magnetic bearing unit having the axial magnetic bearing parts 6 and is not newly added. Therefore, it is not necessary to add any sensor to implement the embodiment and a cost increase caused by adding a sensor is not incurred.

(3) The axial position control section 66 controls the axial position of the main spindle 15 so that the axial position of the tool 22 becomes constant based on the elongation of the main spindle 15 between one of the axial position targets 20 provided on the side of the tool 22 and the tool 22, computed by the second main spindle elongation computation section 65. Therefore, the position is controlled so that the axial position of the tool 22 becomes constant based on the elongation of the main spindle 15 between the axial position target 20 provided on the side of the tool 22 and the tool 22, not considered in the axial position control in the related art described above, so that the axial position of the tool can be fixed precisely as compared with the related art.

(4) The axial position control circuit 60 used in the embodiment described above is provided by adding the function to a microcomputer formerly used for implementing.the.axial position control section 66 in a magnetic bearing unit having the axial magnetic bearing parts 6. Therefore, a cost increase for the above-described control is suppressed.

(5) In the embodiment described above, the axial position control section 66 performs the control of the axial position of the main spindle 15 more than once every predetermined time. Therefore, if the elongation of the main spindle changes, the axial position of the main spindle is controlled so that the axial position of the tool becomes constant.

The embodiment described above may be modified as follows:

In the embodiment described above, the displacement measurement of the axial position targets 20 and the control of the axial position of the main spindle 15 are performed more than once every predetermined time, but need not necessarily be performed every predetermined time. The displacement measurement of the axial position targets 20 and the control of the axial position of the main spindle 15 may be performed more than once in a preset time; for example, they may be performed at short time intervals at the initial stage of the operating and when the operating state becomes stable, the time interval may be prolonged. Accordingly, the axial position of the main spindle 15 can be controlled more finely at the initial stage of the operating where the axial position of the tool 22 easily changes because temperature change of the main spindle 15 is large.

In the embodiment described above, the ROM. 61 contains the experimental data as table data. However, any data other than table data may be provided if it is data giving the relationship between the elongation of the main spindle 15 between the axial position targets 20 and the elongation of the main spindle 15 between the tool side axial position target 20 and the tool 22. For example, if the relationship therebetween is indicated by a relational expression, the data of the relational expression may be included. In this case, the memory capacity for data storage can be saved as compared with storage of the table data. As still another method, graph data indicating the relationship therebetween may be included. In this case, continuous relationship can be obtained as compared with the table, so that the axial position of the main spindle 15 can be controlled more accurately.

In the embodiment described above, the axial magnetic bearing parts 6 use the pair of axial magnetic disks 17, but the axial magnetic bearing parts 6 of the structure wherein a pair of electromagnets 5 attract one axial magnetic disk 17 may be included. In this case, shortening in the axial direction is possible.

In the embodiment described above, the axial position control circuit 60 is implemented as a microcomputer, but may be implemented as any other component capable of providing similar functions. For example, if the axial position control circuit 60 is implemented as a DSP (digital signal processor), high-speed processing is made possible in a simple configuration although general versatility decreases.

(Second embodiment).

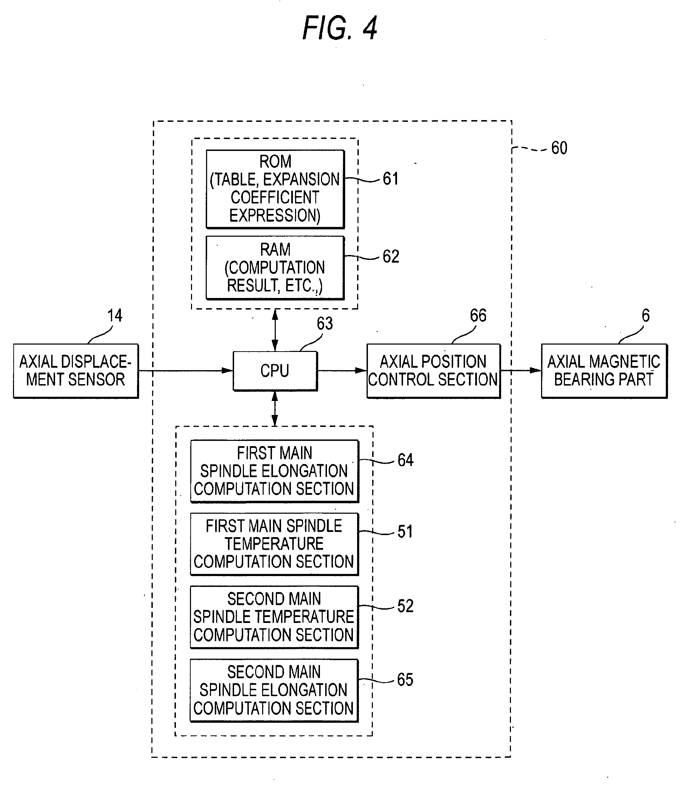

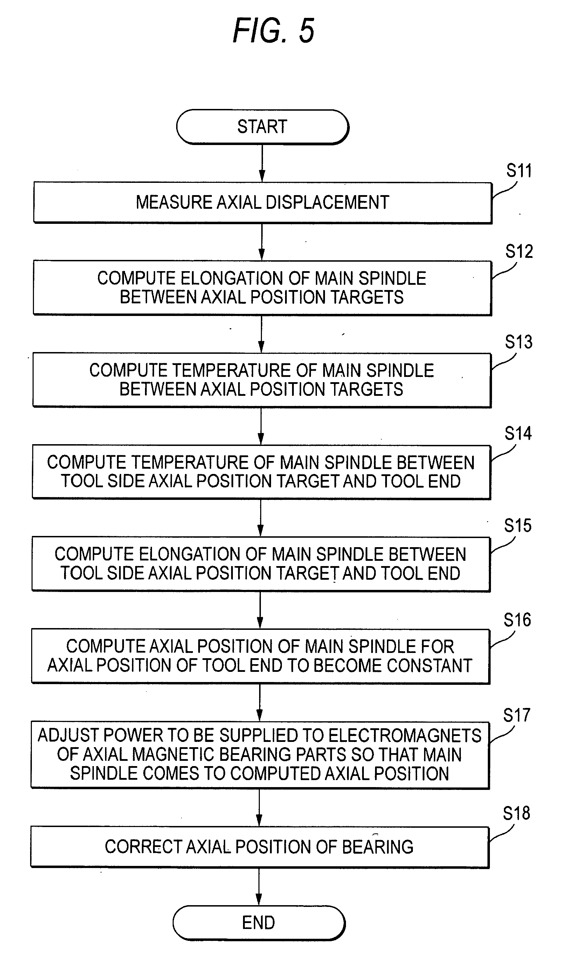

Next., a second embodiment of a magnetic bearing unit according to the invention will be discussed with FIGs. 4 and 5. The second embodiment differs from the first embodiment only in control method. The machine configuration is the same as that of the first embodiment and therefore will not be discussed again.

To begin with, an axial position control circuit 60 will be discussed with FIG. 4.
A first main spindle elongation computation section 64 computes elongation of a main spindle 15 between axial position targets 20 by a CPU 63 based on the displacements of the pair of axial position targets 20 detected by axial displacement sensors 14. A first main spindle temperature computation section 51 computes the temperature of the main spindle 15 between the axial position targets 20 based on the elongation of the main spindle 15 between the axial position targets 20 and an operational expression table stored in ROM 61 of nonvolatile memory. A second main spindle temperature computation section 52 computes the temperature of the main spindle 15 between a tool side axial position target and a tool 22 based on the temperature of the main spindle 15 between the axial position targets 20 and a table stored in the ROM 61. A second main spindle elongation computation section 65 computes elongation of the main spindle 15 between the tool side axial position target and the tool 22 by the CPU 63 based on the temperature of the main spindle 15 between the tool side axial position target and the tool 22 and an operational expression table stored in the ROM 61. The computed elongation of the main spindle 15 between the tool side axial position target and the tool 22 is temporarily stored in RAM 62 of work memory as data and then the data is transmitted to an axial position control section 66. The axial position control section 66 controls.the axial position for an axial magnetic bearing part 6 to support the main spindle 15 based on the data.

Next, a specific method of axial position control will be discussed with FIG. 5.

The pair of axial displacement sensors 14 measures displacements of the axial position targets 20 from reactance change exerted on the axial displacement sensors 14 by the axial position targets. 20 (step 11). The displacement data of the axial position targets 20 is transmitted to the first main spindle elongation computation section 64, which then computes elongation of the main spindle 15 between the axial position targets 20 (step 12). The elongation of the main spindle 15 between the axial position targets 20, computed by the first main spindle elongation computation section 64 is transmitted to the first main spindle temperature computation section 51, which then computes the temperature of the main spindle 15 between the axial position targets 20 (step 13). The relationship between the elongation of the main spindle 15 between the axial position targets 20, computed by the first main spindle elongation computation section 64 and the temperature of the main spindle 15 between the axial position targets 20 is indicated by the following thermal expansion coefficient expression:

$$L_1 = \alpha \cdot L_0 \cdot (T_1 - T_0) \qquad (1)$$

($L_1$ is the length of the main spindle 15 between the axial position targets 20; $\alpha$ is a thermal expansion coefficient, $L_o$ is the length of the main spindle 15 between the axial position targets 20 in initial state or standard state; $T_1$ is the temperature of the main spindle 15 between the axial position targets 20; and $T_0$ is the temperature of the main spindle 15 between the axial position targets 20 in initial state or standard state.)

If the main spindle 15 is carbon steel, $\alpha$ is $10.8 \times 10^{-6}$ [/K]. The first main spindle temperature computation section 51 assigns $L_1$, the length in the standard state, $L_0$, and the temperature of the main spindle 15 between the axial position targets 20. in the standard state, To computed by the first main spindle elongation computation section 64 to expression. (1), thereby computing the temperature of the main spindle 15 at the displacement measuring time of the axial position targets 20, $T_1$ using the CPU 63.

The temperature of the main spindle 15 between the axial position targets 20 is transmitted to the second main spindle temperature computation section 52, which then computes the temperature of the main spindle 15 between the tool side axial position target and the tool 22 (step 14). The relationship between the temperature of the main spindle 15 between the axial position targets 20 and the temperature of the main spindle 15 between the tool side axial position target and the tool 22 can be found experimentally. Data as a table of the experimental results is retained in the ROM 61. The second main spindle temperature computation section 52 makes a comparison between the temperature of the main spindle 15 between the tool side axial position target and the tool 22 and the data as a table retained in the ROM 61, whereby-the temperature of the main spindle 15 between the tool side axial position target and the tool 22 is computed by the CPU 63.

The computed temperature of the main spindle 15 between the tool side axial position target and the tool 22 is transmitted to the second main spindle elongation computation section 65, which then computes the elongation of the main spindle 15 between the tool side axial position target and the tool 22 (step 15). The relationship between the temperature of the main spindle 15 between the tool side axial position target and the tool 22, computed by the second main spindle temperature computation section 52 and the elongation -of the main spindle 15 between the tool side axial position target and the tool 22 is indicated by the following thermal expansion coefficient expression:

$$L_2 = \alpha \cdot L_0' \cdot (T_2 - T_0) \qquad (2)$$

($L_2$ is the length of the main spindle 15 between the tool side axial position target and the tool 22; $\alpha$ is a thermal expansion coefficient, $L_0'$ is the length of the main spindle 15 between the tool side axial position target and the tool 22 in initial state or standard state; $T_2$ is the temperature of the main spindle 15 between the tool side axial position target and the tool.22; and $T_0$ is the temperature of the main spindle 15 between the tool side axial position target and the tool 22 in initial state or standard state.)

If the main spindle 15 is carbon steel, $\alpha$ is $10.8 \times 10^{-6}$ [/K] . The second main.spindle elongation computation section 65 assigns the temperature of the main spindle 15, $T_2$, the temperature of the main spindle 15 between the tool side axial position target and the tool 22 in the standard state, To, and the length in the standard state, $L_0'$ computed by the second main spindle temperature computation section 52 to expression (2), thereby computing $L_2$ at the displacement measuring time of the axial position targets 20 using the CPU 63.

The elongation of the main spindle 15 between the tool side axial position target and the tool 22, computed by the second main spindle elongation computation section 65 is transmitted to the axial position control section 66. The axial position control s.ection 66 calculates the axial position for the position of the tool 22 to become constant. (step 16) and changes the power to be supplied to the axial magnetic bearing parts 6, thereby controlling the axial position of the main spindle 15 (step 17). Consequently, the axial position of the main spindle 15 is corrected (step 18).

The first main spindle elongation computation section 64, the second main spindle elongation computation section 65, the axial position control section 66, the first main spindle temperature computation section 51, and the secondmain spindle temperature computation section 52 actually are implemented as a microcomputer. The microcomputer is provided by adding the functions of the first main spindle elongation computation section 64, the second main spindle elongation computation section 65, the first main spindle temperature computation section 51, and the second main spindle temperature computation section 52 to a microcomputer implementing the axial position control section 66 formerly used in a magnetic bearing unit having the axial magnetic bearing parts 6.

The displacement measurement of the axial position targets 20 by the pair of axial displacement sensors 14 and the control of the axial position of the main spindle 15 by the axial position control section 66 are performed more than once every predetermined time during the operating of the machine tool.

Therefore, according to the second embodiment, the following advantage can be provided in addition to the advantages-described in the first embodiment:

(1) In the second embodiment, the temperature of the main spindle 15 is computed in the first main spindle temperature computation section 51 and the second main spindle temperature computation section 52. Therefore, if informing means is added, the user can be informed of the degree of temperature rise of the main spindle and occurrence of excessive temperature rise.

The second embodiment described above may be modified as follows:

In the embodiment described above, the displacement measurement of the axial position targets 20 and the control of the .axial position of the main spindle 15 are performed more than once every predetermined time, but need not necessarily be performed every predetermined time. The displacement measurement of the axial position targets 20 and the control of the axial position of the main spindle 15 may be performed more than once in a preset time; for example, they may be performed at short time intervals at the initial stage of the operating and when the operating state becomes stable, the time interval may be prolonged. Accordingly, the axial position of the main spindle 15 can be controlled more finely at the initial stage of the operating where the axial position of the tool 22 easily changes because temperature change of the main spindle 15 is large.

In the embodiment described above, the ROM 61 contains the experimental data as table data. However, any data other than table data may be provided if it indicates the relationship between the temperature of the main spindle 15 between the axial position targets 20 and the temperature of the main spindle 15 between one of the axial position targets 20 provided on the side of the tool 22 and the tool 22. For example, if the relationship therebetween is indicated by a relational expression, the relational expression may be included. In this case, the memory capacity for data storage can be saved as compared with storage of the table data. As still another method, graph data indicating the relationship therebetween may be included. In this case, continuous relationship can be obtained as compared with the table, so that the axial position of the main spindle 15 can be controlled more accurately.

In the embodiment described above, the first main spindle elongation computation section 64 to the axial position control section 66 are implemented as a microcomputer, but may be implemented as any other component capable of providing similar functions. For example, if the axial position control circuit 60 is implemented as a DSP (digital signal processor), high-speed processing is made possible in a simple configuration although general versatility decreases.

The embodiment described above may be provided with additional informing means for informing the operator of occurrence of excessive temperature rise if the temperature of the main spindle computed by the first main spindle temperature computation section 51 or the second main spindle temperature computation section 52 rises excessively. A red lamp, a liquid crystal display, a buzzer, etc., can be named as the informing means. The informing means enables the operator to be informed of the danger of a failure, etc., caused by heating the main spindle 15.

Means for automatically decreasing the number of revolutions of a motor or stopping the motor if the temperature of the main spindle rises excessively may be further included. The means makes it possible to avoid a failure of the magnetic bearing unit or the machine tool.

The invention relates to a magnetic bearing unit for suppressing position shift caused by thermal expansion of a main spindle and in particular is widely used for a machine tool for performing no feedback control of the machining result.

**Claims**

1. A magnetic bearing unit for contactlessly supporting a main spindle with a detachable tool attached to a tip part of the main spindle in an axial direction by a radial magnetic bearing part and an axial magnetic bearing part, the magnetic bearing unit comprising:

   first and second axial position targets provided on the man spindle, the first axial position target being located closer to the tip part than the second axial position target is located;
   first and second axial displacement sensors that detect displacements of the first and second axial position targets, respectively;
   a first elongation computation section that computes elongation of the main spindle between the first and second axial position targets based on the displacements of the first and second axial position targets detected by the first and second axial displacement sensors;
   a second elongation computation section that computes elongation of the main spindle between the first axial position target and the tool based on the elongation of the main spindle computed by the first elongation computation section; and

an axial position control section that controls the axial position of the main spindle so that the axial position of the tool becomes constant based on the elongation of the main spindle computed by the second elongation computation section.

2. The magnetic bearing unit according to claim 1 further comprising:

a first temperature computation section that computes a temperature of the main spindle between the first and second axial position targets based on the elongation of the main spindle computed by the first elongation computation section; and

a second temperature computation section that computes the temperature of the main spindle between the first axial position, target and the tool based on the temperature of the main spindle computed by the first temperature computation section,

wherein the second elongation computation section computes the elongation of the main spindle between the first axial position target and the tool based on the temperature computed by the second temperature computation section.

3. The magnetic bearing unit according to claim 1, wherein the axial position control section performs the control of the axial position of the main spindle more than once in a preset time.

FIG. 1

# FIG. 2

```
                    ┌─────────────────────────────┐
                    │  ┌───────────────────────┐  │
                    │  │         ROM           │──│── 61
                    │  │    (TABLE, ETC.,)     │  │
                    │  └───────────────────────┘  │   ┌──── 60
                    │  ┌───────────────────────┐  │
                    │  │         RAM           │──│── 62
                    │  │    (COMPUTATION       │  │
                    │  │     RESULT, ETC.,)    │  │
                    │  └───────────────────────┘  │
```

|   14   |   | 63 |   | 66 |   | 6 |

| AXIAL DISPLACE-MENT SENSOR | → | CPU | → | AXIAL POSITION CONTROL SECTION | → | AXIAL MAGNETIC BEARING PART |

```
                    │  ┌───────────────────────┐  │
                    │  │     FIRST MAIN        │──│── 64
                    │  │  SPINDLE ELONGATION   │  │
                    │  │  COMPUTATION SECTION  │  │
                    │  └───────────────────────┘  │
                    │  ┌───────────────────────┐  │
                    │  │     SECOND MAIN       │──│── 65
                    │  │  SPINDLE ELONGATION   │  │
                    │  │  COMPUTATION SECTION  │  │
                    │  └───────────────────────┘  │
                    └─────────────────────────────┘
```

11

# FIG. 3

START

↓

MEASURE AXIAL DISPLACEMENT — S1

↓

COMPUTE ELONGATION OF MAIN SPINDLE
BETWEEN AXIAL POSITION TARGETS — S2

↓

COMPUTE ELONGATION OF MAIN SPINDLE BETWEEN
TOOL SIDE AXIAL POSITION TARGET AND TOOL END — S3

↓

COMPUTE AXIAL POSITION OF MAIN SPINDLE FOR
AXIAL POSITION OF TOOL END TO BECOME CONSTANT — S4

↓

ADJUST POWER TO BE SUPPLIED TO ELECTROMAGNETS
OF AXIAL MAGNETIC BEARING PARTS SO THAT MAIN
SPINDLE COMES TO COMPUTED AXIAL POSITION — S5

↓

CORRECT AXIAL POSITION OF MAIN SPINDLE — S6

↓

END

# FIG. 4

```
┌─────────────────────────────────────────────────────────────────┐
│    ┌ ─ ─ ─ ─ ─ ─ ─ ─ ─ ─ ─ ─ ─ ┐                         ┌--- 60 │
│    │  ┌─────────────────────┐   │                        │       │
│    │  │         ROM         │   │                        │       │
│    │  │ (TABLE, EXPANSION   ├──61                         │       │
│    │  │   COEFFICIENT       │   │                         │       │
│    │  │   EXPRESSION)       │   │                         │       │
│    │  └─────────────────────┘   │                         │       │
│    │  ┌─────────────────────┐   │                         │       │
│    │  │         RAM         │   │                         │       │
│    │  │   (COMPUTATION      ├──62                          │       │
│    │  │  RESULT, ETC.,)     │   │                         │       │
│    │  └─────────────────────┘   │                         │       │
│    └ ─ ─ ─ ─ ─ ─ ─ ─ ─ ─ ─ ─ ─ ┘                         │       │
```

AXIAL DISPLACE-MENT SENSOR — 14

CPU — 63

AXIAL POSITION CONTROL SECTION — 66

AXIAL MAGNETIC BEARING PART — 6

FIRST MAIN SPINDLE ELONGATION COMPUTATION SECTION — 64

FIRST MAIN SPINDLE TEMPERATURE COMPUTATION SECTION — 51

SECOND MAIN SPINDLE TEMPERATURE COMPUTATION SECTION — 52

SECOND MAIN SPINDLE ELONGATION COMPUTATION SECTION — 65

# FIG. 5

START

MEASURE AXIAL DISPLACEMENT — S11

COMPUTE ELONGATION OF MAIN SPINDLE BETWEEN AXIAL POSITION TARGETS — S12

COMPUTE TEMPERATURE OF MAIN SPINDLE BETWEEN AXIAL POSITION TARGETS — S13

COMPUTE TEMPERATURE OF MAIN SPINDLE BETWEEN TOOL SIDE AXIAL POSITION TARGET AND TOOL END — S14

COMPUTE ELONGATION OF MAIN SPINDLE BETWEEN TOOL SIDE AXIAL POSITION TARGET AND TOOL END — S15

COMPUTE AXIAL POSITION OF MAIN SPINDLE FOR AXIAL POSITION OF TOOL END TO BECOME CONSTANT — S16

ADJUST POWER TO BE SUPPLIED TO ELECTROMAGNETS OF AXIAL MAGNETIC BEARING PARTS SO THAT MAIN SPINDLE COMES TO COMPUTED AXIAL POSITION — S17

CORRECT AXIAL POSITION OF BEARING — S18

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001269828 A
- JP 2006316959 A
- JP 2007107584 A